# EUROPÄISCHE PATENTSCHRIFT

(11) **EP 1 675 683 B1**
(45) Veröffentlichungstag und Bekanntmachung des Hinweises auf die Patenterteilung: **02.03.2011**
(21) Anmeldenummer: 04764067.7
(22) Anmeldetag: 12.08.2004
(51) Int. Cl.: B02C 15/04

(54) **Verfahren zum Betreiben einer Wälzmühle und Verfahren zur Herstellung von Zement**
Method of operating of roller grinding mill, and method for the production of cement
Procédé d'utilisation d'un broyeur à cylindres, et procédé de production de ciment

(30) Priorität: 12.09.2003 DE 10342191; 18.09.2003 DE 10343218
(43) Veröffentlichungstag der Anmeldung: 05.07.2006
(73) Patentinhaber: Loesche GmbH, 40549 Düsseldorf (DE)
(72) Erfinder: LOESCHE, Thomas, 40882 Ratingen (DE)
(74) Vertreter: Heim, Hans-Karl
(86) Internationale Anmeldenummer: PCT/EP2004/009069
(87) Internationale Veröffentlichungsnummer: WO 2005/028112

(56) Entgegenhaltungen:
- DE-A- 2 166 219
- DE-A- 19 702 854
- DE-A- 19 836 323
- DE-C- 105 099
- DE-C- 153 958
- DE-C- 19 826 324

## Beschreibung

Die Erfindung betrifft, ein Verfahren zum Betreiben einer Wälzmühle gemäß dem Oberbegriff des Anspruchs 1 und ein Verfahren zur Herstellung von Zement gemäß dem Oberbegriff des Anspruch 5.

Es ist bekannt, Wälzmühlen zur Vermahlung unterschiedlichster Materialien einzusetzen. Aus DE 105 099 C ist ein Walzenstuhl mit einem Kranz von über einem rotierenden Mahltisch angeordneten Mahlwalzen bekannt, welcher ein Grundgestell und schwenkbeweglich an diesem Grundgestell gelagerte Ständer aufweist. In den Ständern sind die Mahlwalzen federnd gelagert und können mit dem gesamten Ständer und weiteren daran befestigten Teilen nach außen geklappt werden.

Aus der DE 198 26 324 C ist eine Walzenschüsselmühle mit Mahlwalzen bekannt, welche mittels Drückstücken, Drückrahmen und dergleichen auf den Mahlteller gedrückt werden. Jeweils zwei Mahlwalzen sind in Umfangsrichtung hintereinander angeordnet an einer gemeinsamen, mehrteiligen Halterung gehalten. 1

Aus DE 153 958 C ist eine Kegelmühle bekannt, bei welcher auf einem umlaufenden Mahlteller acht Mahlkegel unter Federdruck liegen und außerhalb des Mahltellers gelagert sind. Die Mahlkegel können einzeln aus einer waagerechten Mahlstellung in eine senkrechte Stellung zwecks Besichtigung, Auswechslung usw. gebracht werden.

In DE 197 02 854 A1 sind ein Verfahren und eine Rollenmühle beschrieben. Im Gegensatz zu den Wälzmühlen zur Zerkleinerung von mineralischem Mahlgut, wie z.B. Zement-Rohmaterial, Zementklinker und dergleichen, bei denen die Antriebsleistung für die Zerkleinerungsarbeit durch eine einzige Antriebseinrichtung mit Antriebsmotor und Getriebe für den Drehantrieb des Mahltellers eingebracht wird, sind die auf einem Mahlteller abrollenden Mahlrollen direkt angetrieben und weisen einen eigenen Drehantrieb auf, wobei Betriebsschwankungen zwischen den einzelnen Drehantrieben der Mahlrollen durch eine gemeinsame Lastausgleichsregelung ausgeglichen werden. Er werden drei oder vier Mahlrollen vorgesehen, und bei einem Schaden an einer Mahlrolle oder an dem Drehantrieb kann eine Mahlrolle aus dem Mühlengehäuse herausbewegt werden bzw. deren Drehantrieb kann repariert oder ausgetauscht werden, während die verbleibenden zwei bzw. drei Mahlrollen weiterarbeiten.

Aus DE 21 66 219 A ist eine Wälzmühle mit einem Mühlengetriebe für die Mahlschüssel und darauf abrollenden, schwenkschwenkbar gelagerten Mahlwalzen bekannt, wobei jede Walze einzeln auf einem für sich tragfähigen Ständer gelagert ist. Es wird eine besonders vorteilhafte Lösung für ein rasches und einfaches Ausschwenken des Schwinghebels mit Mahlwalze beschrieben.

Die Wälzmühlen, insbesondere Luftstrommühlen, weisen in konstruktiver und regelungstechnischer Hinsicht sowie in Bezug auf den Energieverbrauch, das Umweltverhalten und die Gesamtwirtschaftlichkeit erhebliche Vorteile auf.

In der Zementindustrie werden Luftstrom-Wälzmühlen sowohl zur Herstellung von Zementrohmehl als auch zur Klinkervermahlung und Kohlevermahlung eingesetzt. Wenn Rohmaterialmahlanlagen im Verbund mit Drehrohröfen und einer Kalzinieranlage betrieben werden, können die Ofenabgase aus dem Wärmetauscherund Klinkerkühler-Prozess zur Mahltrockung und zum pneumatischen Transport des gemahlenen Zementrohmaterials bzw. der Kohle genutzt werden.

Verfahren zur Herstellung von Zement in einem Verbundsystem mit einer vertikalen Luftstrom-Wälzmühle des Loesche-Typs zur Mahltrocknung einer Rohmaterialmischung sind in der DE 198 36 323 C2 beschrieben. Aus der DE AS 23 61 060 ist neben einer Mahltrocknung von Rohmehl in einer Luftstrom-Wälzmühle eine Kühlungsmahlung von Zementklinker in einer einem Drehrohrofen nachgeschalteten Luftstrom-Wälzmühle bekannt.

In der Regel werden Zwei-, Drei- und Vier-Walzen-Mühlen, welche nach dem Modulsystem aufgebaut sind, eingesetzt. Für die Vermahlung von Schlacken und Mischzementen haben sich außerdem modifizierte Wälzmühlen des Loesche-Systems bewährt, welche als 2 + 2 Walzen-Mühlen oder 3 + 3 Walzen-Mühlen bezeichnet werden. Bei diesen 2 + 2 bzw. 3 + 3 Walzen-Mühlen werden Walzenpaare, bestehend jeweils aus einer Vorverdichtwalze, auch S-Walze (Slave-roller) genannt, und einer Mahlwalze, auch M-Walze (Master-roller) genannt, eingesetzt. Bei einer 3 + 3 Walzen-Mühle sind somit drei Mahlwalzen und drei Vorverdichtwalzen angeordnet, wobei jeweils eine Vorverdichtwalze einer Mahlwalze zugeordnet ist. Durch eine Präparierung und gezielte, gleichmäßige Mahlbettbildung wird ein vibrationsarmer Mühlenbetrieb erreicht, wodurch höhere spezifische Mahlkräfte möglich sind, welche zu einer verbesserten Produktqualität führen (EP 0 406 644 B1).

Um die erforderliche Betriebssicherheit eines Zementwerkes bei einem kontinuierlichen Betrieb des Drehrohrofens durch eine entsprechende Mühlenleistung zu gewährleisten, sind Sicherheitskonzepte bekannt.

Nach einem herkömmlichen Sicherheitskonzept werden für die Rohmehlverarbeitung bei großen Ofenleistungen zwei parallele Wälzmühlen mit einem Drehrohrofen kombiniert. Nachteilig sind hierbei unter anderem die wesentlich höheren Investitionskosten (ca. 20 bis 40 %) im Vergleich zur Kombination mit einer Wälzmühle bzw. einer Rohmaterialmahlanlage. Grundsätzlich lässt die hohe Verfügbarkeit der Wälzmühle in der Zementindustrie die wirtschaftlichste Kombination von einem Drehrohrofen mit einer Wälzmühle zu. Bei Vier-Walzen-Mühlen mit individuell in Schwinghebeln geführten Walzen nach dem Loesche-System kann in Verbindung mit einem ausreichend hohen Volumenstrom ein Zwei-Walzen-Notbetrieb gefahren werden, bei dem ca. 55 bis 60 % der Volllast-Produktrate und eine entsprechend reduzierte Ofenleistung erreicht werden. Bei Zwei- oder Drei-Walzen-Mühlen ist der Stillstand der Mahlanlagen zwangsläufig.

Der Erfindung liegt die **Aufgabe** zugrunde, ein Verfahren zum Betreiben einer Wälzmühle, insbesondere einer Luftstrommühle, und ein Verfahren zur Zementherstellung zu schaffen und mit einem relativ geringen Investitionsaufwand eine außerordentlich hohe Betriebssicherheit der Zementwerke zu gewährleisten.

Diese Aufgabe wird, in Bezug auf das Verfahren zum Betreiben einer Wälzmühle durch die Merkmale des Anspruchs 1 und in Bezug auf die Zementherstellung durch die Merkmale des Anspruchs 5 gelöst. Zweckmäßige und vorteilhafte Ausgestaltungen sind in den Unteransprüchen und in der Figurenbeschreibung enthalten.

Ein Grundgedanke der Erfindung ist darin zu sehen, eine Wälzmühle derart auszulegen, dass sie mit etwa 80 % der Volllast eine erforderliche Mühlen-Produktrate erreicht. In Bezug auf die Verwendung einer Wälzmühle, z.B. zur Vermahlung einer Rohmaterial-Mischung, bedeutet dies, dass die Zementrohmaterialanlage bzw. die Rohmehlmühle so ausgelegt wird, dass sie mit etwa 80 % der Volllast den 24-Stunden-Betrieb des Drehrohrofens gewährleistet.

Gemäß dem erfindungsgemäßen Verfahren zum Betreiben einer Wälzmühle, ist vorgesehen, eine ständige Verfügbarkeit von vier Mahlwalzen durch die Anordnung von sechs Mahlwalzen zu sichern, wobei die sechs Mahlwalzen paarweise ausschwenkbar angeordnet sind und ständig vier Mahlwalzen zweier Mahlwalzenpaare etwa 80 % der vollen Mühlenleistung in einem Vier-Walzen-Betrieb erbringen.

Es werden sechs Mahlwalzen angeordnet und etwa 80 % der vollen Mühlenleistung in einem Vier-Walzen-Betrieb erreicht, so dass mahlwalzenseitig eine nahezu 100 %ige Redundanz gewährleistet ist.

Zweckmäßigerweise sind die Mahlwalzen paarweise aus einer Betriebsposition in eine Serviceposition ausschwenkbar und das Mühlengehäuse derart abgedichtet, dass bei ausgeschwenkten Mahlwalzen der Vier-Walzen-Betrieb gewährleistet ist.

Vorteilhafterweise werden die sechs Mahlwalzen nach dem an sich bekannten Modulsystem angeordnet. Dieses Modulsystem sieht vor, dass jeweils ein Ständer und ein Schwinghebel zur Führung einer Mahlwalze sowie ein hydropneumatisches Federungssystem für ein Mahlwalzenpaar angeordnet sind, so dass bei sechs Mahlwalzen eine 3 x 2 Walzenmühle ausgebildet ist.

Dadurch besteht die vorteilhafte Möglichkeit, dass die Wälzmühle bei Betriebsstörungen oder Beschädigungen der Mahlwalzen, Schwinghebel oder Federungssysteme nach einem kurzen Anhalten und Ausschwenken eines Mahlwalzenpaares mit vier Mahlwalzen weiterbetrieben werden kann, so dass 80 % der vollen Mühlenleistung erreicht werden können. Während dieser Zeit können die ausgeschwenkten Mahlwalzen repariert bzw. ersetzt werden.

Das erfindungsgemäße Verfahren zum Betreiben der Wälzmühle gewährleistet ständig eine volle Leistung nachgeschalteter Vorrichtungen, beispielsweise eines Drehrohrofens, durch eine entsprechende Leistung der Wälzmühle.

Im Vergleich zu den bisherigen Sicherheitskonzepten ist das erfindungsgemäße Verfahren zum Betraben einer Wälzmühle außerordentlich wirtschaftlich und sicher. Die signifikante Wirtschaftlichkeit zeigt sich in besondere bei der Verwendung des erfindungsgemäßen Verfahrens in einer Zementanlage, welche im Verbundbetrieb geschaltet ist. Grundsätzlich kann es bei allen Mahlverfahren und auch in einer Zentral-Mahlanlage Anwendung finden.

Das erfindungsgemäße Verfahren zur Herstellung von Zement in einer Verbundanlage, bei welcher in einer Zementrohmaterialanlage Zementrohmaterial in einer Wälzmühle mit Hilfe von auf einer rotierenden Mahlbahn abrollenden Mahlwalzen unter Zufuhr von Abgasen aus einem Wärmetauscher- oder Kühler-Prozess einer Mahltrocknung unterzogen wird und nach einer Sichtung und Abscheidung des Rohmehls aus der Rohmehl-Abgas-Mischung in einem Filter und/oder Zyklon einem Vorwärmer und Vorkalzinierer und/oder Drehrohrofen aufgegeben wird, sieht eine Wälzmühle vor, in welcher sechs Mahlwalzen als Mahlwalzenpaare angeordnet werden und eine 3x2 Wälzmühle gebildet wird, wobei dei Wälzmühle derart ausgelegt wird, dass 80 % der vollen Mühlenleistung durch vier Mahlwalzen in einem Vier-Walzen-Betrieb erbracht werden.

Um eine außerordentlich hohe Betriebssicherheit bei der Zementherstellung zu gewährleisten, werden sechs Mahlwalzen paarweise gegenüberliegend zu einer 3 x 2 Walzenmühle angeordnet und das Rohmehl einer Mahltrocknung unterzogen. Entsprechend dem Modul-System besteht die Möglichkeit, dass bei Betriebsstörungen oder Schadensfällen an Walzen und Schwinghebeln oder an der hydropneumatischen Federung sowie an Verschleißteilen der Walzen die Wälzmühle kurz angehalten und ein Walzenpaar ausgeschwenkt wird. Die Wälzmühle kann dann unmittelbar mit vier Mahlwalzen weiterbetrieben werden, während die ausgeschwenkten Mahlwalzen repariert, beispielsweise der Walzenmantel ersetzt wird.

Das erfindungsgemäße Verfahren und eine Sechs-Walzen-Mühle als eine 3 x 2 Walzenmühle, sind für alle Einsatzgebiete und Mahlprozesse anwendbar, welche eine definierte Mahlleistung einer Wälzmühle für nachfolgende Prozesse erfordern, beispielsweise auch in der Kohlevermahlung für Kohlestaubförderungen etc.

Die Erfindung wird nachstehend anhand einer Zeichnung weiter erläutert; in dieser zeigen in einer stark schematisierten Darstellung
- Fig. 1: eine Wälzmühle mit einer ausgeschwenkten Mahlwal- ze;
- Fig. 2: eine Draufsicht auf einen Mahlteller mit sechs Mahlwalzen einer Wälzmühle gemäß dem erfindungs- gemäßen Verfahren und
- Fig. 3: ein Anlagenschema einer Zementanlage zur Durch- führung des erfindungsgemäßen Verfahrens.

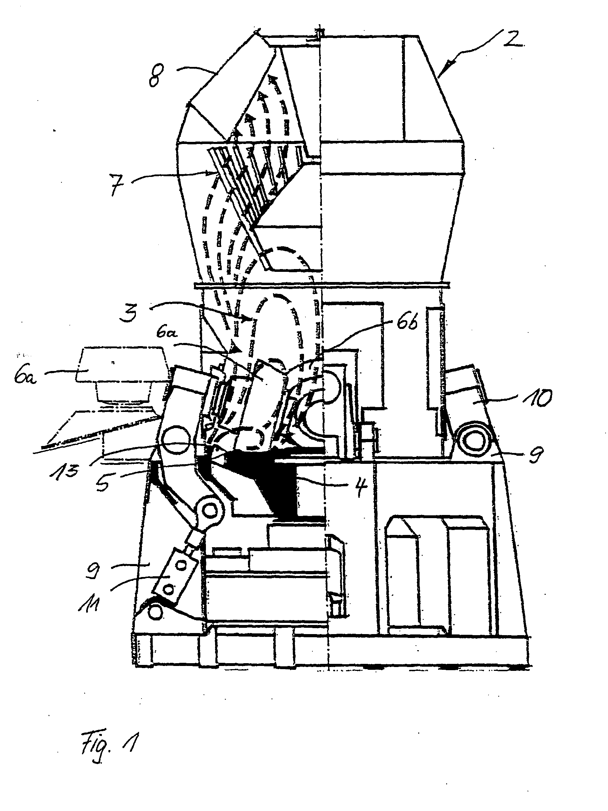

In Fig. 1 ist in einer stark schematisierten Darstellung als eine Wälzmühle 2 eine vertikale Luftstrom-Wälzmühle des Loesche-Typs mit einem Mahlraum 3, einem rotierenden Mahlteller 4 mit einer Mahlbahn 5 und darauf abrollenden Mahlwalzen 6a bis 6f, einem Sichter 7 und einem Rohmehl-Abgas-Auslass 8 dargestellt.

Die Mahlwalzen 6a bis 6f sind nach dem Modulsystem angeordnet, welches für jede Mahlwalze 6a bis 6f einen Ständer 9 und einen Schwinghebel 10 zur Führung einer Mahlwalze 6a bis 6f sowie ein hydropneumatisches Federungssystem 11 für ein Walzenpaar 6a, 6d; 6b, 6e; 6c, 6f aufweist, so dass eine 3 x 2 Walzenmühle gebildet ist.

Durch die Anordnung von sechs Mahlwalzen und Auslegung der Wälzmühle 2 derart, dass etwa 80 % der vollen Mühlenleistung von vier Mahlwalzen erreicht werden, ist ein Sicherheitssystem mahlwalzenseitig erreicht, welches eine nahezu 100 %ige Redundanz gewährleistet.

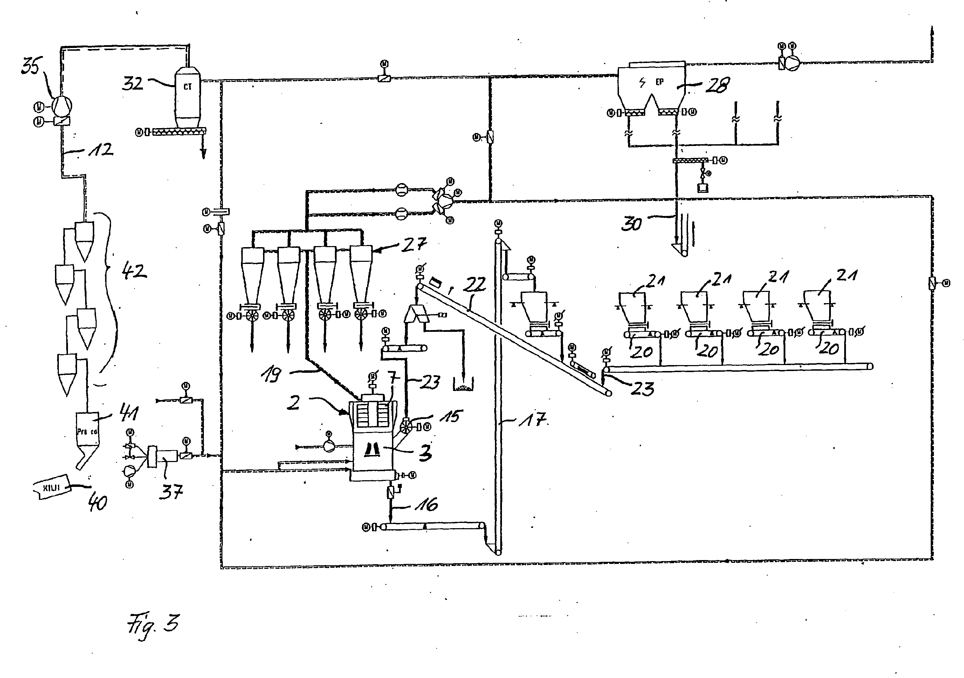

Bei Einsatz einer Wälzmühle 2 zur Mahltrocknung von Zementrohmaterial bzw. eines Rohmaterialgemisches, welches mit Anfangsfeuchten bis zu 23 % ohne Vortrockung der Wälzmühle 2, insbesondere durch eine zentrale Aufgabeeinrichtung (nicht dargestellt), aufgegeben werden kann, wird ein Heißgas, beispielsweise ein Abgas 12 aus einem Klinkerkühler bzw. einer Wärmetauschereinheit 42 und/oder einem Kühler 32, als Trocknungs- und Trägergas für das Rohmehl eingesetzt (siehe Fig. 3). Das Abgas 12 aus der Wärmetauschereinheit 42 strömt aus einem Zuführkanal (nicht dargestellt) über einen Leitschaufelkranz 13 bzw. Düsenring in den Mahlraum 3 (siehe Fig. 1) und fördert das von den Mahlwalzen 6a bis 6f vermahlene Rohmehl in den Sichter 7 und über den Rohmehl-Abgas-Auslass 8 zu einem Filter 28 (siehe auch Fig. 3).

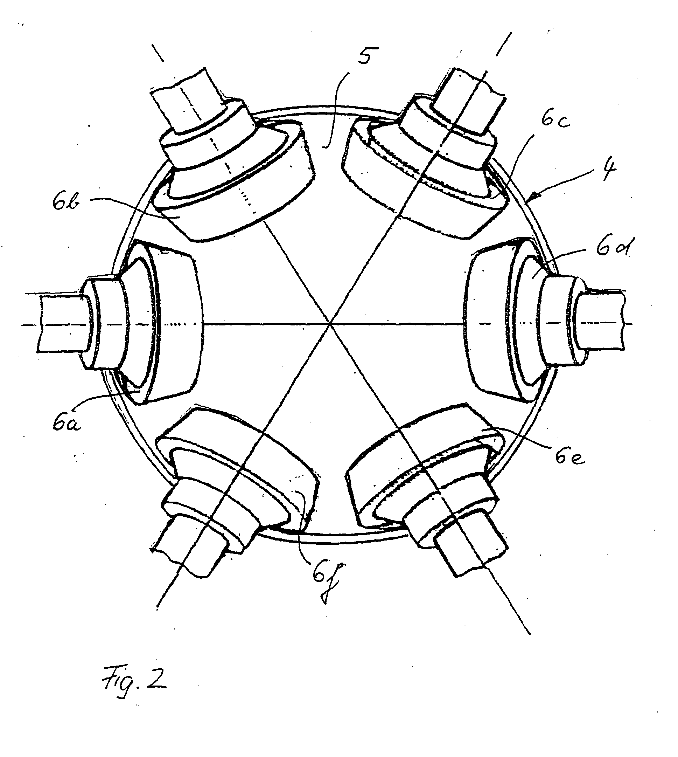

In strichpunktierter Darstellung ist in Fig. 1 eine ausgeschwenkte Mahlwalze 6a gezeigt. Durch die paarweise Zuordnung des hydropneumatischen Federungssystems 11 wird die gegenüberliegende Mahlwalze 6d (siehe Fig. 2) mit herausgeschwenkt, so dass ein Vier-Walzen-Betrieb aufrechterhalten wird. In der in Figur 1 strichpunktiert gezeigten Serviceposition der Mahlwalze 6a **-** die gegenüberliegende Mahlwalze 6d dieses Mahlwalzenpaares ist nicht gezeigt - können die herausgeschwenkten Mahlwalzen repariert werden, während der Mahlprozess mit etwa 80 % der vollen Mühlenleistung durchgeführt wird.

Fig. 2 zeigt in einer Draufsicht auf einen Mahlteller 4 mit Mahlbahn 5 ein Sicherheitssystem für Wälzmühlen mit mehr als vier Mahlwalzen. In diesem Ausführungsbeispiel sind sechs Mahlwalzen 6a bis 6f vorgesehen, und der Mahlteller 4 mit der Mahlbahn 5 sowie ein ausreichend hoher Volumenstrom ermöglichen eine Mahlleistung, welche etwa 80 % der Vollleistung der Wälzmühle beträgt, wenn von den sechs Mahlwalzen 6a bis 6f zwei Mahlwalzen 6a, 6d oder 6b, 6e oder 6c, 6f ausgeschwenkt sind.

Fig. 3 zeigt beispielhaft ein Anlagenschema einer Zementanlage zur Durchführung des erfindungsgemäßen Verfahrens. Die Wälzmühle 2 ist gemäß Fig. 1 und 2 ausgebildet und dient der Vermahlung einer Rohmaterialmischung 23 aus Einzelkomponenten, welche aus Bunkern 21 über Wiegebänder 20 einem Aufgabeband 22 zugeführt und der Wälzmühle 2 über eine seitliche Aufgabeeinrichtung 15 aufgegeben wird.

In der Wälzmühle 2 abgeschiedenes Grobmaterial 16 wird über eine Fördereinrichtung 17 der Rohmaterialmischung 23 wenigstens teilweise zugemischt und der Wälzmühle 2 wieder zugeführt.

Zur Mahltrocknung der Rohmaterialmischung 23 werden die Abgase 12 aus einer Wärmetauschereinheit 42, welcher je nach Technologie einem Drehrohrofen 40 mit oder ohne Vorkalzinierer 41 vorgeschaltet ist, verwendet. Die Wärmetauscherabgase 12 werden nach dem Wärmetauschergebläse 35 zur Wälzmühle 2 geführt. Je nach Aufgabenfeuchte der Rohmaterialmischung 23 werden die Abgase 12 direkt zur Wälzmühle 2 geleitet (nicht dargestellt) oder durch einen Kühlturm 32 auf die Bedarfstemperatur der Wälzmühle 2 konditioniert. Bei Wärmemangel kann auch durch Kühlerabgas oder mit Hilfe eines Heißgaserzeugers 37 die fehlende Wärmemenge zugeführt werden.

Eine Rohmehl-Abgasrohrleitung 19 führt von der Wälzmühle 2 zu einer Zykloneinheit 27, welcher ein Filter 28 nachgeschaltet ist, und das in dem Filter 28 anfallende Rohmehl 30 gelangt direkt oder über ein Silo mit geringem Fassungsvermögen (nicht dargestellt) über die Wärmetauschereinheit 42 und den Vorkalzinierer 41 in den Drehrohrofen 40.

Fig. 3 vermittelt ein Sicherheitssystem zur Sicherung der erforderlichen Mühlenleistung im Hinblick auf einen störungsfreien Brennprozess bei größtmöglicher Auslastung des Drehrohrofens 40. Zu diesem Zweck weist die Wälzmühle 2 mehr als vier Mahlwalzen, insbesondere sechs Mahlwalzen 6a bis 6f gemäß Figur 2 auf.

## Patentansprüche

1. Verfahren zum Betreiben einer Wälzmühle (2), bei welcher in einem Mahlraum (3) auf einer rotierenden Mahlbahn (5) sechs Mahlwalzen (6a bis 6f) abrollen,
**dadurch gekennzeichnet,**
**dass** die sechs Mahlwalzen (6a bis 6f) paarweise ausschwenkbar angeordnet werden und eine 3 x 2-Walzenmühle gebildet wird,
**dass** ständig vier Mahlwalzen für einen Vier-Walzen-Betrieb verfügbar sind und dass die Wälzmühle (2) derart ausgelegt wird, dass mit den vier Mahlwalzen in einem Vier-Walzen-Betrieb 80% der vollen Mahlleistung der Wälzmühle (2) erbracht werden.

2. Verfahren nach Anspruch 1 oder 2,
**dadurch gekennzeichnet,**
**dass** der Vier-Walzen-Betrieb und 80% der vollen Mahlleistung der Wälzmühle (2) gesichert werden, wenn zwei Mahlwalzen als Mahlwalzenpaar (6a, 6d oder 6b, 6e oder 6c, 6f) aus einer Betriebsposition in eine Serviceposition ausgeschwenkt werden.

3. Verfahren nach einem der vorhergehenden Ansprüche,
**dadurch gekennzeichnet,**
**dass** die sechs Mahlwalzen (6a bis 6f) nach dem an sich bekannten Modulsystem, bei welchem jeweils ein Ständer (9) und ein Schwinghebel (10) zur Führung einer Mahlwalze (6a bis 6f) sowie ein hydropneumatisches Federungssystem (11) für ein Mahlwalzenpaar (6a, 6d; 6b, 6e; 6c, 6f) vorgesehen sind, angeordnet werden.

4. Verfahren nach Anspruch 3,
**dadurch gekennzeichnet,**
**dass** die Wälzmühle (2) bei Betriebsstörungen oder Beschädigungen der Mahlwalzen (6a bis 6f), Schwinghebel (10) oder Federungssysteme (11) nach einem kurzen Anhalten und Ausschwenken eines Mahlwalzenpaares (6a, 6d oder 6b, 6e oder 6c, 6f) zwecks Reparatur mit vier Mahlwalzen (6b, 6e, 6c, 6f oder 6a, 6d, 6c, 6f oder 6a, 6d, 6b, 6e) und 80% der vollen Mühlenleistung betrieben wird.

5. Verfahren zur Herstellung von Zement in einer Verbundanlage, bei welcher in einer Zementrohmaterialanlage Zementrohmaterial (23) in einer Wälzmühle (2) mit Hilfe von sechs auf einer rotierenden Mahlbahn (5) abrollenden Mahlwalzen (6a bis 6f) unter Zufuhr von Heißgasen, insbesondere von Abgasen (12) aus einer Wärmetauschereinheit (42) und einem Kühlturm (32), einer Mahltrocknung unterzogen wird und nach einer Sichtung und Abscheidung des Rohmehls (30) aus der Rohmehl-Abgas-Mischung (19) in einer Zykloneinheit (27) und/oder einem Filter (28) über eine Wärmetauscheinheit (42) einem Vorkalzinierer (41) und/oder Drehrohrofen (40) aufgegeben wird,
**dadurch gekennzeichnet,**
**dass** die sechs Mahlwalzen (6a bis 6f) als Mahlwalzenpaare (6a, 6d; 6b, 6e; 6c, 6f) angeordnet werden und eine 3 x 2 Wälzmühle gebildet wird und
**dass** die Wälzmühle (2) derart ausgelegt wird, dass 80% der vollen Mühlenleistung durch vier Mahlwalzen (6a, 6d, 6b, 6e oder 6b, 6e, 6c, 6f oder 6a, 6d, 6c, 6f) in einem Vier-Walzen-Betrieb erbracht werden.

6. Verfahren nach Anspruch 5,
**dadurch gekennzeichnet,**
**dass** die sechs Mahlwalzen (6a bis 6f) nach dem an sich bekannten Modulsystem angeordnet werden, wobei ein Modul jeweils von einem Ständer (9) mit einem Schwinghebel (10), einer Mahlwalze (6a bis 6f) und einer hydropneumatischen Federung (11) gebildet wird, und dass bei einer Betriebsstörung oder Beschädigung einer Mahlwalze (6a bis 6f), eines Schwinghebels (10) oder eines hydropneumatischen Federungssystems (11) oder von Verschleißteilen der Mahlwalzen (6a bis 6f) die Wälzmühle (2) angehalten wird, eine Schwinghebel-Mahlwalzen-Einheit (10, 6a, 6d) paarweise von der Betriebsposition in eine Servicepostion ausgeschwenkt wird und die Wälzmühle (2) mit den verbleibenden vier Mahlwalzen (6b, 6e; 6c, 6f) weiterbetrieben wird.

7. Verfahren nach Anspruch 6,
**dadurch gekennzeichnet,**
**dass** die in die Serviceposition ausgeschwenkten Schwinghebel-Mahlwalzen-Einheiten (10, 6a, 6d) während des Vier-Walzen-Betriebes der Wälzmühle (2) repariert werden.

## Claims

1. Method for operating a roller grinding mill (2) having a milling chamber (3) in which on a rotary milling surface (5) six milling rollers (6a to 6f) are rolling, **characterized in that**
the six milling rollers (6a to 6f) are arranged such that they can be swung out pairwise and a 3 x 2 roller mill is formed,
that a continuous availability of four milling rollers is ensured for a four-roller operation and that the roller grinding mill (2) is constructed in such a way that with the four milling rollers in a four-roller operation 80% of the full milling capacity of the roller grinding mill (2) is provided.

2. Method according to claim 1 or 2,
**characterized in that**
the four-roller operation and 80% of the full milling capacity of the roller grinding mill (2) are ensured if two milling rollers as milling roller pair (6a, 6d or 6b, 6e or 6c, 6f) are swung out from an operating position into a service position.

3. Method according to one of the preceding claims,
**characterized in that**
the six milling rollers (6a to 6f) are arranged in accordance with the per se known modular system, in which in each case one pedestal (9) and one rocking lever (10) is provided for guiding a milling roller (6a to 6f), together with a hydropneumatic spring suspension system (11) for a milling roller pair (6a, 6d; 6b, 6e; 6c, 6f).

4. Method according to claim 3,
**characterized in that**
in the case of breakdowns or damage to the milling rollers (6a to 6f), rocking levers (10) or spring suspension systems (11), the roller grinding mill (2) is operated with four milling rollers (6b, 6e, 6c, 6f or 6a, 6d, 6c, 6f or 6a, 6d, 6b, 6e) and 80% of the full mill capacity following a brief stoppage and swinging out of one milling roller pair (6a, 6d or 6b, 6e or 6c, 6f) for repair purposes.

5. Method for the production of cement in a combined plant having a cement raw material plant in which cement raw material (23) undergoes mill drying in a roller grinding mill (2) with the aid of six milling rollers (6a to 6f) rolling on a rotary milling surface (5) and accompanied by the supply of hot gases, particularly waste gases (12) from a heat exchanger unit (42) and a cooling tower (32), and following classifying and separation of the raw powder (30) from the raw powder-waste gas mixture (19) in a cyclone unit (27) and/or a filter (28) is fed via a heat exchanger unit (42) to a precalciner (41) and/or rotary kiln (40),
**characterized in that**
the six milling rollers (6a to 6f) are arranged as milling roller pairs (6a, 6d; 6b, 6e; 6c, 6f) and a 3 x 2 roller mill is formed and
that the roller grinding mill (2) is designed in such a way that 80% of the full milling capacity is provided by four milling rollers (6a, 6d, 6b, 6e or 6b, 6e, 6c, 6f or 6a, 6d, 6c, 6f) in a four-roller operation.

6. Method according to claim 5,
**characterized in that**
the six milling rollers (6a to 6f) are arranged according to the per se known modular system, one module being in each case formed by a pedestal (9) with a rocking lever (10), a milling roller (6a to 6f) and a hydropneumatic spring suspension (11), and that in the case of a breakdown or damage to a milling roller (6a to 6f), a rocking lever (10) or a hydropneumatic spring suspension system (11) or wearing parts of the milling rollers (6a to 6f) the rolling mill (2) is stopped, a rocking lever-milling roller unit (10, 6a, 6d) is swung out pairwise from the operating position into a service position and the further operation of the roller grinding mill (2) takes place with the remaining four milling rollers (6b, 6e; 6c, 6f).

7. Method according to claim 6,
**characterized in that**
the rocking lever-milling roller units (10, 6a, 6d) swung out into the service position are repaired during the four-roller operation of the roller grinding mill (2).

## Revendications

1. Procédé de fonctionnement d'un broyeur (2) à cylindres, dans lequel six cylindres de broyage (6a à 6f) tournent dans une chambre de broyage (3) sur une piste de broyage rotative (5),
***caractérisé***
***en ce que*** les six cylindres de broyage (6a à 6f) sont disposés de manière pivotante par paire et qu'un broyeur à 3 x 2 cylindres est formé,
***en ce qu'**en* permanence, quatre cylindres de broyage sont disponibles pour un fonctionnement à quatre cylindres, et
***en ce que*** le broyeur (2) à cylindres est conçu de telle manière qu'avec les quatre cylindres de broyage en fonctionnement à quatre cylindres, on atteint 80 % de la puissance totale de broyage du broyeur (2) à cylindres.

2. Procédé selon la revendication 1 ou 2,
***caractérisé***
***en ce que*** le fonctionnement à quatre cylindres et les 80 % de la puissance totale de broyage du broyeur (2) à cylindres sont assurés lorsque deux cylindres de broyage formant une paire (6a, 6d ou 6b, 6e ou 6c, 6f) de cylindres de broyage sont pivotés d'une position de fonctionnement à une position d'entretien.

3. Procédé selon l'une quelconque des revendications précédentes,
***caractérisé***
***en ce que*** les six cylindres de broyage (6a à 6f) sont disposés selon le système connu des modules, dans lequel à chaque fois un montant (9) et un levier basculant (10) sont prévus pour guider un cylindre de broyage (6a à 6f), ainsi qu'un système de suspension hydropneumatique (11) pour une paire (6a, 6d ; 6b, 6e ; 6c, 6f) de cylindres de broyage.

4. Procédé selon la revendication 3,
***caractérisé***
***en ce qu'****en* cas de panne ou de détérioration des cylindres (6a à 6f) de broyage, des leviers basculants (10) ou des systèmes de suspension (11), après un court arrêt et pivotement d'une paire (6a, 6d ou 6b, 6e ou 6c, 6f) de cylindres de broyage, le broyeur (2) à cylindres fonctionne à des fins de réparation avec quatre cylindres de broyage (6b, 6e, 6c, 6f ou 6a, 6d, 6c, 6f ou 6a, 6d, 6b, 6e) et 80 % de la puissance totale de broyage.

5. Procédé de fabrication de ciment dans une installation combinée, dans laquelle, dans une installation à matières premières du ciment, une matière première (23) du ciment est soumise à un séchage-broyage dans un broyeur (2) à cylindres à l'aide de six cylindres de broyage (6a à 6f) roulant sur une piste de broyage rotative (5) avec apport de gaz chauds, en particulier de gaz d'échappement (12) provenant d'une unité échangeuse de chaleur (42) et d'une tour de refroidissement (32), et, après tamisage et séparation de la farine crue (30) à partir du mélange farine crue-gaz d'échappement (19) dans une unité à cyclone (27) et/ou un filtre (28), est transmise à un pré-calcinateur (41) et/ou à un four tubulaire rotatif (40) par l'intermédiaire d'une unité échangeuse de chaleur (42),
***caractérisé***
***en ce que*** les six cylindres de broyage (6a à 6f) sont disposés par paires (6a, 6d ; 6b, 6e ; 6c, 6f) et un broyeur à 3 x 2 cylindres est formé, et
***en* ce *que*** le broyeur (2) à cylindres est conçu de telle manière qu'avec les quatre cylindres de broyage (6a, 6d, 6b, 6e ou 6b, 6e, 6c, 6f ou 6a, 6d, 6c, 6f) en fonctionnement à quatre cylindres, on atteint 80 % de la puissance totale de broyage.

6. Procédé selon la revendication 5,
***caractérisé***
***en ce que*** les six cylindres de broyage (6a à 6f) sont disposés selon le système connu des modules, dans lequel un module est formé à chaque fois d'un montant (9) avec un levier basculant (10), d'un cylindre de broyage (6a à 6f) et d'une suspension hydropneumatique (11), et
***en ce qu'***en cas de panne ou de détérioration d'un cylindre de broyage (6a à 6f), d'un levier basculant (10) ou d'un système de suspension hydropneumatique (11) ou de pièces d'usure des cylindres de broyage (6a à 6f), le broyeur (2) à cylindres est arrêté, une unité levier basculant-cylindre de broyage (10, 6a, 6d) est pivotée, en tant que paire, de la position de fonctionnement à une position d'entretien, et le broyeur (2) à cylindres continue à fonctionner avec les quatre cylindres de broyage (6b, 6e ; 6c, 6f) restants.

7. Procédé selon la revendication 6,
***caractérisé***
***en ce que*** les unités levier basculant-cylindre de broyage pivotées dans la position d'entretien (10, 6a, 6d) sont réparées pendant le fonctionnement à quatre cylindres du broyeur (2) à cylindres.
